(19) Europäisches Patentamt
European Patent Office
Office européen des brevets

(11) **EP 2 577 225 B1**

(12) **FASCICULE DE BREVET EUROPEEN**

(45) Date de publication et mention
de la délivrance du brevet:
**24.12.2014 Bulletin 2014/52**

(51) Int Cl.:
***G01B 11/24*** *(2006.01)*      ***G01C 23/00*** *(2006.01)*
***G01B 11/02*** *(2006.01)*

(21) Numéro de dépôt: **11721778.6**

(22) Date de dépôt: **26.05.2011**

(86) Numéro de dépôt international:
**PCT/EP2011/058696**

(87) Numéro de publication internationale:
**WO 2011/147947 (01.12.2011 Gazette 2011/48)**

(54) **DISPOSITIF ET PROCEDE DE DETERMINATION D'UNE INFORMATION DE PROFONDEUR A PARTIR D'UN CAPTEUR OPTIQUE SUSCEPTIBLE D'ETRE EN DEPLACEMENT**

VORRICHTUNG UND VERFAHREN ZUR BESTIMMUNG DER TIEFENDATEN VON EINEM OPTISCHEN, BEWEGLICHEN SENSOR

DEVICE AND METHOD FOR DETERMINING DEPTH DATA FROM AN OPTICAL SENSOR THAT CAN BE MOVING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2010 FR 1002220**

(43) Date de publication de la demande:
**10.04.2013 Bulletin 2013/15**

(73) Titulaire: **SYSNAV**
**27200 Vernon (FR)**

(72) Inventeurs:
• **VISSIERE, David**
**F-27200 Vernon (FR)**
• **HILLION, Mathieu**
**F-91430 Vauhallan (FR)**

(74) Mandataire: **Regimbeau**
**20, rue de Chazelles**
**75847 Paris Cedex 17 (FR)**

(56) Documents cités:
WO-A1-90/01169          WO-A1-2004/048893
US-A1- 2007 171 094

## Description

L'invention concerne de manière générale l'analyse d'images et de données fournies par des capteurs optiques. Plus particulièrement l'invention concerne un dispositif et un procédé de détermination d'une information de profondeur à partir d'un capteur optique susceptible d'être en déplacement, ainsi qu'un dispositif optique de détermination de données tridimensionnelles.

Un capteur optique, comme une caméra vidéo ou un appareil de photographie numérique, possède des récepteurs sensibles à l'intensité lumineuse et aux couleurs. Un tel capteur peut ainsi enregistrer des données visuelles afin de reproduire une image en deux dimensions représentant fidèlement le paysage visible par ces récepteurs.

L'essor récent des technologies de visualisation en trois dimensions-cinématographie, lunettes, téléviseur - a développé l'appétit du public pour les applications 3D. Aussi, il serait intéressant de disposer d'un capteur optique apte à enregistrer des informations de profondeurs du paysage, et pas seulement à reproduire une image plane.

A cet effet, il existe des modèles reliant, pour un capteur optique fixe, l'intensité lumineuse reçue par un capteur optique dans une direction donnée et la distance entre le capteur et un objet dans cette direction donnée. On peut ainsi estimer les distances du capteur optique à plusieurs objets de l'environnement, ce qui complète les données visuelles classiques en deux dimensions. Des techniques par stéréovision (mettant en oeuvre deux capteurs optiques) ou par monovision (mettant en oeuvre un seul capteur optique) sont classiquement connues de l'homme de l'art.

De telles méthodes, si elles supposent le capteur optique immobile (elles sont dites « statiques »), sont peu fiables si le capteur optique est en mouvement. L'estimation du champ de profondeur peut être, dans ce cas, fort éloignée de la réalité. Il est alors intéressant de disposer d'informations sur le déplacement du capteur optique afin de raffiner le modèle statique en un modèle dynamique.

On peut obtenir ces informations de déplacement à partir de capteurs inertiels solidaires du capteur optique. Il s'agit en général d'accéléromètres, de gyroscopes ou de gyromètres dont les mesures sont intégrées par un processeur pour estimer des grandeurs de déplacement « inertielles » du capteur optique, typiquement les vitesses linéaires et de rotation, et la position.

Toutefois, ces estimations sont faussées par les biais des mesures et les erreurs des méthodes d'intégration numériques, et ne donnent pas satisfaction si on les incorpore telles quelles dans un modèle dynamique.

Il existe des méthodes pour améliorer la pertinence des grandeurs inertielles, en utilisant des données dites « externes » de déplacement du capteur optique, lesquelles données ne proviennent pas des capteurs inertiels. A cette fin, on peut par exemple comparer les grandeurs inertielles avec les données externes au moyen d'un filtre de Kalman.

Ces données externes sont généralement fournies par un dispositif de géolocalisation externe, par exemple de type GSM, GPS, ou fonctionnant par suivi d'interférométrie (*laser tracker* en terminologie anglo-saxonne). Ceci n'est pas sans poser problème dans l'application au capteur optique. En effet, le dispositif de géolocalisation représente d'importantes contraintes matérielles et de coût à l'échelle d'un capteur optique. En outre, les informations de géolocalisation, transmises par une source extérieure sont susceptibles :

- d'être indisponibles dans diverses situations, comme par exemple dans un bâtiment, ou lorsque le nombre de satellites en visibilité directe est insuffisant, ou encore lorsque le signal est brouillé, et
- d'être dégradées, par exemple entre des bâtiments ou lorsqu'il y a des problèmes de multi-trajets.

Une telle solution n'est donc envisageable que pour des applications en laboratoire avec du matériel très couteux, ou en extérieur lorsque les vitesses de déplacement sont importantes, de sorte que le signal du GPS donnant la vitesse présente un bon rapport information utile par rapport au bruit.

Il est aussi possible de réduire le biais des mesures en utilisant des capteurs inertiels de grande précision. Cette solution suppose un coût très important. De plus, de tels capteurs inertiels peuvent être soumis à des règles particulières d'intégration. Par ailleurs, elle ne compense pas les erreurs dus à l'intégration numérique.

Un but de l'invention est de surmonter les difficultés que présentent les solutions de l'art antérieur.

A cet effet, l'invention propose un dispositif de détermination d'une information de profondeur à partir d'un capteur optique susceptible d'être en déplacement, le dispositif comprenant :

- un moyen d'estimation d'un champ magnétique, comprenant

  • un ensemble de capteurs magnétiques destinés à être disposés de manière solidaire du capteur optique, l'ensemble de capteurs étant destiné à fournir des mesures du champ magnétique, et
  • une unité de traitement destinée à déterminer une information de champ représentative du champ magnétique, à partir des mesures du champ magnétique,

- une unité inertielle comprenant

- un ensemble de capteurs inertiels destinés à être disposés de manière solidaire du capteur optique et à fournir des mesures inertielles du déplacement du capteur optique, et
  - une unité de traitement destinée à déterminer une information de déplacement représentative du déplacement du capteur optique à partir des mesures inertielles,

- une unité de calcul destinée à déterminer, à partir de l'information de champ, de l'information de déplacement et d'une information optique fournie par le capteur optique, une information de profondeur à partir du capteur optique.

Avantageusement mais facultativement, le dispositif selon l'invention comprend au moins l'une, ou une quelconque combinaison possible, des caractéristiques suivantes :

- dans un cas où l'information optique comprend des informations représentatives d'une intensité lumineuse reçue par le capteur optique dans des directions respectives, et l'information de profondeur comprend des valeurs estimées de distances respectives entre le capteur optique et des objets suivant les directions respectives, le dispositif permettant ainsi d'estimer un champ de profondeur à partir du capteur optique,
- l'information de champ comporte une matrice représentative des dérivées partielles spatiales du champ magnétique, en un point particulier, dans un repère lié au capteur optique,
- l'ensemble de capteurs magnétiques comporte quatre capteurs magnétiques, chacun étant apte à mesurer le champ magnétique selon trois axes, les quatre capteurs magnétiques étant disposés selon une configuration centrée,
- l'ensemble de capteurs magnétiques est disposé selon une configuration redondante,
- l'unité de traitement du moyen d'estimation du champ magnétique est destinée à déterminer l'information de champ à partir des mesures fournies par l'ensemble de capteurs magnétiques et à partir de propriétés intrinsèques supposées du champ magnétique, et
- l'unité de traitement du moyen d'estimation du champ magnétique est en outre destinée à fournir une information secondaire de champ, l'unité de traitement de l'unité inertielle étant alors destinée à déterminer l'information de déplacement du capteur optique à partir des mesures inertielles et de l'information secondaire de champ.

L'invention concerne également, selon un deuxième aspect, procédé de détermination d'une information de profondeur à partir d'un capteur optique susceptible d'être en déplacement, le procédé comprenant :

- une étape d'estimation d'un champ magnétique, laquelle étape comprend :

  - une sous-étape de détermination de mesures du champ magnétique, et
  - une sous-étape de détermination d'une information de champ représentative du champ magnétique à partir des mesures du champ magnétique,

- une étape d'estimation de déplacement du capteur optique, laquelle étape comprend :

  - une sous-étape de détermination de mesures inertielles du déplacement du capteur optique, et
  - une sous-étape de détermination d'une information de déplacement représentative du déplacement du capteur optique à partir des mesures inertielles,

- une étape de détermination, à partir de l'information de champ, de l'information de déplacement et d'une information optique fournie par le capteur optique, d'une information de profondeur à partir du capteur optique.

Avantageusement mais facultativement, le procédé selon l'invention comprend au moins l'une, ou une quelconque combinaison possible, des caractéristiques suivantes :

- dans un cas où l'information optique comprend des informations représentatives d'une intensité lumineuse reçue par le capteur optique dans des directions respectives, l'information de profondeur comprend des valeurs estimées de distances respectives entre le capteur optique et des objets suivant les directions respectives, le procédé permettant ainsi d'estimer un champ de profondeur à partir du capteur optique,
- l'information magnétique comprend une matrice représentative des dérivées partielles spatiales du champ magnétique, en un point particulier, dans un repère lié au capteur optique.
- l'information magnétique est déterminée à partir des mesures magnétiques du champ magnétique et de propriétés intrinsèques supposées du champ magnétique, et
- l'étape d'estimation du champ magnétique comprend en outre une sous-étape de détermination d'une information magnétique secondaire, l'information de déplacement du capteur optique étant alors déterminée à partir des mesures inertielles et de l'information magnétique secondaire.

Selon un troisième aspect, l'invention concerne un dispositif optique de détermination de données tridimensionnelles comprenant un capteur optique et un dispositif de détermination d'une information de profondeur à partir du capteur optique selon le premier aspect de l'invention.

L'invention présente de nombreux avantages :

- L'utilisation des capteurs magnétiques permet d'augmenter de manière significative la pertinence des distances estimées.
- Contrairement à un dispositif de géolocalisation basé sur l'utilisation de signaux extérieurs (par exemple de type GSM ou GPS), les capteurs magnétiques ne sont pas tributaires de la réception d'un signal externe. Ils sont opérants partout où il existe un champ magnétique détectable, par exemple le champ magnétique terrestre.
- Grâce à la précision apportée par les capteurs magnétiques, il est possible d'avoir de bonnes performances en utilisant des capteurs inertiels de qualité réduite, ce qui permet de diminuer significativement les coûts de fabrication, et de réduire drastiquement l'encombrement du système et sa consommation, les capteurs de qualité réduite étant généralement moins imposants et peu gourmands en énergie.

D'autres caractéristiques, buts et avantages de la présente invention apparaîtront à la lecture de la description détaillée qui va suivre, au regard des dessins annexés, donnés à titre d'exemples non limitatifs et sur lesquels :

- la figure 1 illustre, de manière schématique, un dispositif de détermination d'une information de profondeur à partir d'un capteur optique selon une réalisation possible du premier aspect de l'invention,

- la figure 2 représente sur un schéma des distances d'un capteur optique à des objets à deux instants différents suivant une même direction dans un repère lié au capteur optique,

- la figure 3 illustre, de manière schématique, un dispositif de détermination d'une information de profondeur à partir d'un capteur optique selon une réalisation possible d'une variante avantageuse du premier aspect de l'invention,

- la figure 4 représente sur un schéma les distances d'un capteur optique à un objet caractéristique à deux instants différents suivant une direction caractéristique,

- la figure 5 représente schématiquement un capteur optique et des capteurs magnétiques disposés dans une disposition centrée selon une réalisation possible du premier aspect de l'invention,

- la figure 6 représente schématiquement un capteur optique et des capteurs magnétiques disposés dans une position redondante selon une réalisation possible du premier aspect de l'invention, et

- la figure 7 représente, sous la forme d'un schéma bloc, un procédé de détermination d'une information de profondeur à partir d'un capteur optique selon une réalisation possible du deuxième aspect de l'invention.

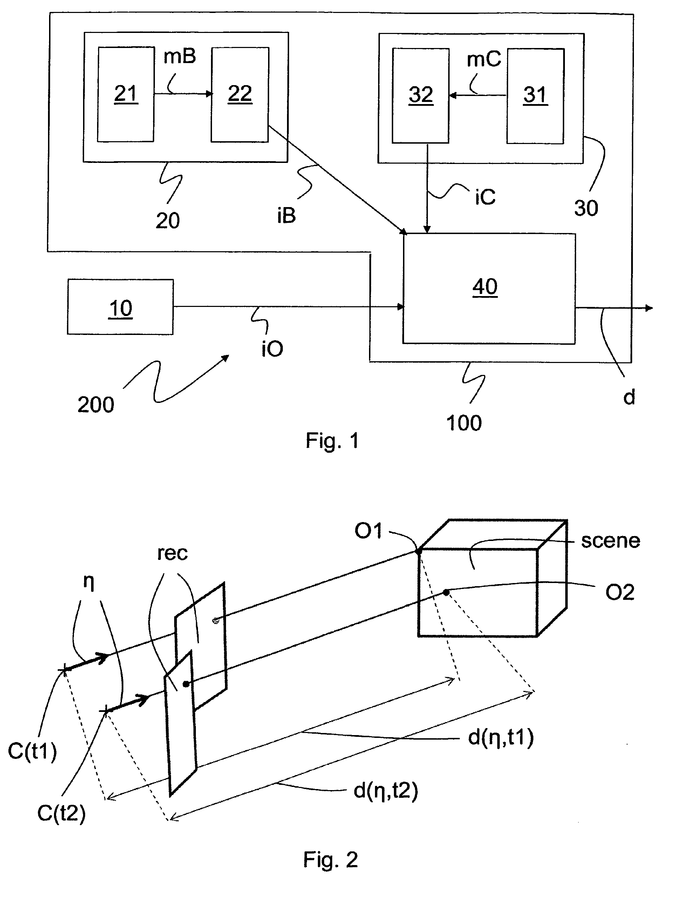

En référence à la figure 1, un dispositif 100 de détermination d'une information d de profondeur à partir d'un capteur 10 optique susceptible d'être en déplacement selon le premier aspect de l'invention comprend un moyen 20 d'estimation d'un champ magnétique B, une unité 30 inertielle et une unité 40 de calcul.

Le moyen 20 d'estimation de champ magnétique B comprend un ensemble 21 de capteurs magnétiques destinés à être disposés de manière solidaire du capteur 10 optique et à fournir des mesures mB du champ magnétique B, à une unité 22 de traitement du moyen 20.

L'unité 22 de traitement est destinée à déterminer une information iB de champ représentative du champ magnétique B, à partir des mesures mB du champ magnétique B fournies par l'ensemble 21 de capteurs magnétiques.

A titre d'exemple non limitatif, les capteurs magnétiques peuvent être des magnétomètres mono-axe, bi-axe tri-axe, ou multi-axe, et les mesures mB représentent les composantes du champ magnétique (mesuré en Tesla ou en Gauss) sur un, deux, trois ou un nombre supérieur d'axes de l'espace.

L'unité 22 de traitement peut être un processeur, un microprocesseur ou tout autre moyen adapté connu de l'homme de l'art.

L'unité 30 inertielle comprend un ensemble 31 de capteurs inertiels destinés à être disposés de manière solidaire du capteur 10 optique et à fournir des mesures mC inertielles du déplacement du capteur 10 optique, et une unité 32 de traitement destinée à déterminer une information iC de déplacement représentative du déplacement du capteur 10 optique à partir des mesures mC inertielles.

A titre d'exemple non limitatif, les capteurs inertiels peuvent être des accéléromètres, des gyroscopes ou des gyromètres mono-axe, bi-axe ou tri-axe, ou tout autre capteur inertiel adapté connu de l'homme de l'art. Les mesures mC inertielles peuvent représenter par exemple des mesures de l'accélération, de l'inclinaison ou de la vitesse angulaire du capteur 10 optique suivant un, deux ou trois axes de l'espace.

L'information iC peut contenir une vitesse, une position, une inclinaison ou encore une vitesse de rotation du capteur 10 optique suivant un, deux ou trois axes de l'espaces. Elles peuvent être obtenues à partir des mesures mC inertielles par une méthode d'intégration numérique, comme une méthode des différences finies ou toute autre méthode adaptée connue de l'homme de l'art.

L'unité 32 de traitement peut être un processeur, un microprocesseur ou tout autre moyen adapté pour déterminer l'information iC inertielle à partir des mesures mC inertielles.

Par « de manière solidaire du capteur 10 optique », on entend qu'un mouvement du capteur 10 optique entraine un mouvement des capteurs magnétiques, et des capteurs inertielles de sorte à pouvoir lier les variations des mesures mB du champ magnétique B et des mesures mC inertielles au déplacement du capteur 10 optique.

De manière non limitative, les capteurs inertiels 21 comme magnétiques 32 peuvent être fixés à même le capteur 10 optique, ou bien sur un support (non représenté) solidaire du capteur 10 optique, ou bien encore être liés de manière mobile au capteur 10 optique. Une solution hybride peut encore être adoptée.

L'unité 40 de calcul est destinée à déterminer une information d de profondeur à partir du capteur 10.

On entend par information de profondeur à partir du capteur 10 optique une information concernant la position du capteur 10 optique dans son environnement ou la position des éléments de l'environnement par rapport au capteur 10 optique. L'information d de profondeur peut comprendre toute information concernant la position relative d'éléments de l'environnement ou encore la position absolue d'éléments de l'environnement ou du capteur 10 optique dans un référentiel donné.

Avantageusement, mais non limitativement, l'information d de profondeur comprend une valeur estimée d'une distance $d(\eta)$ entre le capteur 10 optique et un objet dans une direction $\eta$ donnée. Cette estimation de distance est susceptible de varier au cours du temps ; aussi lorsqu'elle est considérée à un instant t, on la notera parfois $d(\eta,t)$ dans la suite.

La direction $\eta$ est déterminée, par exemple, dans un repère à trois axes lié au capteur 10 optique, désigné par « repère capteur » dans la suite. On considérera que $\eta$ est un vecteur à trois coordonnées dans le repère capteur et par souci de simplicité, on supposera que ce vecteur est normé (c'est-à-dire que la somme des carrés de ses coordonnées vaut 1). On entendra alors par « direction $\eta$ » la droite passant par un point central C du capteur 10 optique et dirigée par le vecteur $\eta$.

Le point central C peut être le foyer image du capteur 10 optique, un autre point optique caractéristique du capteur 10 optique, ou tout autre point adapté connu de l'homme de l'art.

On entend par objet tout élément visible des récepteurs du capteur 10 optique dans la direction $\eta$, c'est-à-dire tout élément qui modifie l'intensité lumineuse reçue par le capteur 10 optique dans cette direction

La distance $d(\eta)$ entre un objet et le capteur 10 optique dans la direction $\eta$ désigne la distance entre le point central C du capteur 10 optique et le premier point de l'objet rencontré en suivant la direction $\eta$.

On a représenté sur la figure 2 les distances $d(\eta,t1)$ et $d(\eta,t2)$ entre un capteur 10 optique et des objets d'une scène visible par le capteur 10 optique à deux instants différentes t1 et t2 dans une même direction $\eta$ dans un repère terrestre.

On a noté C(t1) et C(t2) la position dans un repère terrestre du point central C aux instants t1 et t2.

Dans cet exemple illustratif, le capteur optique est en déplacement et en mouvement rotationnel entre les instants t1 et t2. Aussi, la direction $\eta$ change dans le repère terrestre entre les instants t1 et t2 (alors qu'elle ne change pas dans le repère lié au capteur).

On a représenté une scène vue par le capteur 10 optique sous la forme d'un parallélépipède rectangle, et on a noté O1, respectivement 02, l'objet de la scène le plus proche du capteur 10 optique dans la direction $\eta$ à l'instant t1, respectivement t2.

Par ailleurs, on a représenté sous la forme d'un rectangle les limites de l'ensemble des directions issues du point central C visibles par le capteur 10 optique. Il peut s'agir, par exemple, des récepteurs du capteur 10 optique lorsque le point central C est le foyer image et on les a notés rec. A chaque instant, seules les directions passant par le point central C et un point intérieur au rectangle rec sont visibles du capteur.

L'ensemble des directions visibles du capteur 10 optique à partir du point central C n'est pas nécessairement représentable par un rectangle ; rec pourrait être un disque, un polygone ou une forme bidimensionnelle quelconque dépendant du capteur 10 optique.

Pour estimer la distance $d(\eta)$, l'unité 40 de calcul utilise l'information iB de champ, l'information iC de déplacement et d'une information iO optique fournie par le capteur 10 optique et propre à la direction $\eta$.

L'information iO peut contenir, par exemple, l'évolution de l'intensité lumineuse $y(\eta,t)$ reçue dans la direction $\eta$ au cours du temps. La notation $y(\eta,t)$ souligne le fait que l'intensité lumineuse y dépend de la direction $\eta$ considérée

et du temps, communément désigné par t.

Si le capteur 10 optique est apte à détecter plusieurs couleurs, $y(\eta,t)$ peut être un vecteur avec une composante pour chaque couleur. Si le capteur est monochrome, $y(\eta,t)$ n'a qu'une seule composante. Pour simplifier les notations, on considérera dans la suite que $y(\eta,t)$ n'a qu'une seule composante, les calculs qui suivent pouvant être effectués (de manière couplée ou indépendante) sur chaque composante de $y(\eta,t)$ dans le cas où il s'agit d'un vecteur.

L'information iO peut aussi contenir des renseignements similaires sur les directions proches de la direction $\eta$ qui peuvent s'avérer pertinentes pour les calculs.

L'information iO optique peut aussi contenir les données décrites ci-dessus propres à plusieurs directions $\eta$ respectives. L'information d de profondeur comprend alors avantageusement des estimations de distances $d(\eta)$ respectives entre le capteur 10 optique et des objets suivant les directions $\eta$ respectives.

On appelle champ de profondeur suivant plusieurs directions données un ensemble de distances du capteur 10 optique à des objets dans ces directions données. Le dispositif 100 selon le premier aspect de l'invention permet ainsi d'estimer un champ de profondeur $d(\eta)$ suivant les directions $\eta$ respectives.

En considérant un grand nombre de directions $\eta$ respectives, on peut ainsi établir une estimation détaillée de profondeur d'une scène visible par les récepteurs du capteur 10 optique, estimation qui complète les données visuelles en deux dimensions enregistrées par ces récepteurs.

Cette estimation de profondeur peut servir à incruster, dans les images représentées par les données en deux dimensions, des images de synthèse de manière réaliste en prenant en compte la position relative des objets de l'image.

Elle peut encore servir, par exemple, à faire une cartographie tridimensionnelle de l'environnement du capteur.

Selon une variante avantageuse, mais non limitative, du premier aspect de l'invention, l'information iB magnétique contient une matrice H représentative des dérivées partielles spatiales du champ magnétique B dans le repère capteur, en un point particulier $P_{mag}$.

La matrice H est aussi communément appelée « matrice jacobienne » du champ B au point $P_{mag}$, il s'agit de la matrice des gradients des composantes du champ B.

Avantageusement, mais non limitativement, la position du point particulier $P_{mag}$ peut être choisie de différentes manières. Elle est préférentiellement connue et stockée dans l'unité 40 de calcul.

Dans la suite, on considère qu'on mesure 3 coordonnées du champ magnétiques B, de sorte que la matrice H a 3 lignes. De même, on s'intéresse aux dépendances du champ selon 3 coordonnées d'espace, de sorte que la matrice H a 3 colonnes. On dit communément que la matrice H est de taille 3x3. L'invention n'est toutefois pas limitée à ce cas particulier, et les calculs qui suivent peuvent être adaptés à différentes tailles possibles de la matrice H, en particulier à une matrice H à une colonne (une seule composante du champ magnétique est mesurée) ou bien à deux colonnes (deux composantes du champ magnétique sont mesurées).

Dans cette variante, on utilise comme postulat l'équation 1 suivante :

$$\frac{\partial B(t)}{\partial t} = -w(t) \wedge B(t) + RHR^{T}v_{P_{mag}}(t) \qquad \text{Equation 1}$$

dans laquelle :

- w désigne la vitesse angulaire du capteur 10 optique dans le repère capteur,
- $\wedge$ désigne le produit vectoriel entre deux vecteurs
- R représente la matrice de passage entre un repère terrestre local et le repère capteur, - $v_{Pmag}$ est la vitesse du capteur 10 optique au point $P_{mag}$ dans le repère capteur, et
- t désigne le temps.

La formule suivante lie $v_{pmag}$ à la vitesse v du capteur 10 optique au point central C dans le repère capteur:

$$v_{P_{mag}}(t) = v(t) + \overrightarrow{P_{mag}C} \wedge w(t)$$

Aussi, en prenant pour w la vitesse de rotation inertielle du capteur donnée par des gyromètres, et pour R la matrice de rotation obtenue par des gyroscopes, on peut déduire, à partir des mesures de B et de H fournies par le moyen 20 d'estimation de champ magnétique une valeur v de la vitesse du capteur 10 optique.

Avantageusement, mais non limitativement, R et w peuvent être estimés en utilisant uniquement des données issus de gyromètres, ou bien uniquement des données provenant de gyroscopes, par toute méthode de dérivation ou d'intégration numérique adaptée connue de l'homme de l'art.

La demanderesse a constaté qu'une telle valeur est plus proche de la vitesse réelle du capteur 10 optique que celle obtenue en intégrant les données inertielles provenant d'accéléromètres.

L'équation 1 est couplée avec d'autres équations pour estimer la distance d entre le capteur 10 optique et des objets.

Par exemple, une telle méthode permet d'estimer l'évolution de la distance $d(\eta,t)$ du capteur 10 optique au plus proche objet dans la direction $\eta$ en intégrant le système 1 d'équations suivant :

$$\begin{cases} \dfrac{\partial y(\eta, t)}{\partial t} = -\overrightarrow{grad}[y(\eta, t)] \cdot \left( \eta \wedge \left( w(t) + \dfrac{1}{d(\eta, t)} \cdot \eta \wedge v(t) \right) \right) \\ \dfrac{\partial B(t)}{\partial t} = -w(t) \wedge B(t) + RHR^T \left( v(t) + \overrightarrow{P_{mag}C} \wedge w(t) \right) \end{cases} \qquad \text{Système 1}$$

dans lequel *grad* désigne le gradient.

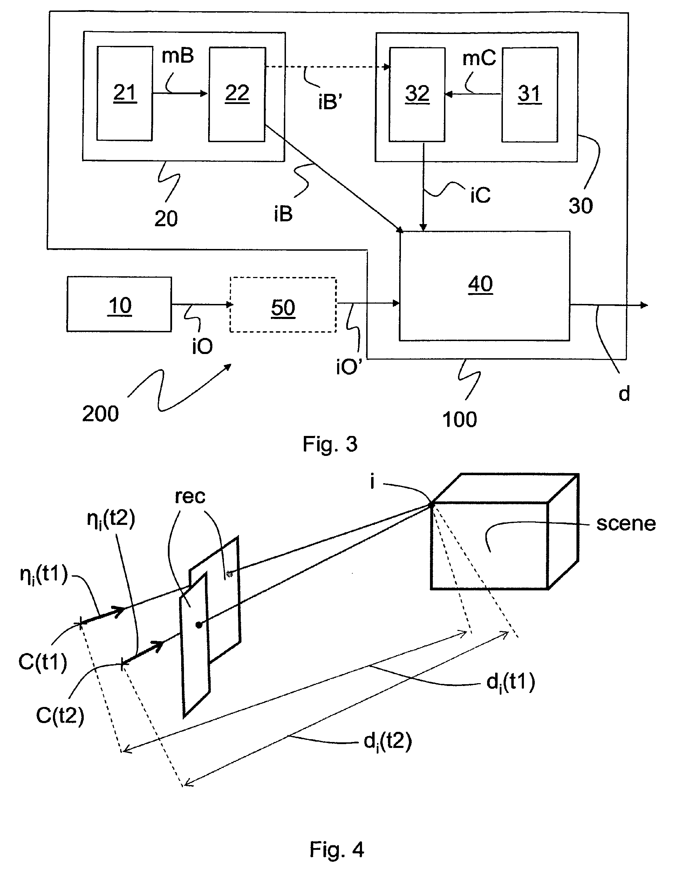

En référence à la figure 3, l'information iO optique fournie par le capteur 10 optique peut, de manière non limitative, être traitée par une unité 50 de traitement d'image avant d'être transmise à l'unité 30 sous la forme d'une information iO' traitée.

Le traitement d'image peut comprendre un re-fenêtrage, une adaptation à l'intensité lumineuse, ou tout autre traitement adapté connu de l'homme de l'art.

Avantageusement, mais non limitativement, le traitement d'image peut comprendre un suivi de déplacement d'objets caractéristiques ou de points caractéristiques i dans des images successives. L'unité 50 de traitement d'image comprend alors préférentiellement un module de reconnaissance visuelle, implémentant une méthode de reconnaissance de type comparaison de blocs d'une image à une autre (*block matching* en terminologie anglo-saxonne), de suivi de frontières visibles (*corner tracking* en terminologie anglo-saxonne) ou toute autre méthode adaptée connue de l'homme de l'art.

On entend par objet caractéristique un objet particulier visible par le capteur 10 optique, comme par exemple une porte, un écran de télévision, une table, un canapé, un tableau, ou tout autre objet dépendant du contexte visible par le capteur 10 optique.

On entend par point caractéristique un élément pouvant être considéré comme ponctuel, et pouvant être facilement repéré ou caractérisé. Il peut s'agir d'un point de couleur différente des objets qui sont autour, un coin d'une porte, un angle d'un meuble, ou tout autre point dépendant du contexte visible par le capteur 10 optique.

On a représenté sur la figure 4 un point caractéristique i vu par le capteur 10 optique à deux instants différents t1 et t2. On appelle direction caractéristique $\eta_i$ la direction qui relie le point central C à l'objet caractéristique i. Cette direction n'est pas fixe dans le repère capteur, elle dépend du déplacement du capteur 10 optique et donc du temps t.

Avantageusement, la direction caractéristique $\eta_i$ est fournie par l'unité 50 de traitement d'image. On note alors $d_i$ la distance entre le capteur 10 optique et l'objet caractéristique i en suivant la direction $\eta_i$
L'information d de profondeur comprend alors avantageusement une valeur estimée de la distance $d_i$.

Préférentiellement, mais non limitativement, l'unité 40 de calcul peut estimer la distance $d_i$ en intégrant le système d'équations :

$$\begin{cases} \dfrac{d\eta_i(t)}{dt} = \eta_i(t) \wedge \left( w(t) + \dfrac{1}{d_i(t)} \cdot \eta_i \wedge v(t) \right) \\ \dfrac{\partial B(t)}{\partial t} = -w(t) \wedge B(t) + RHR^T \left( v(t) + \overrightarrow{P_{mag}C} \wedge w(t) \right) \end{cases} \qquad \text{Système 2}$$

Les systèmes d'équations 1 et 2 sont préférentiellement intégrés par l'unité 40 de calcul au moyen de diverses méthodes d'intégration numérique comme par exemple, à titre non limitatif :

des méthodes aux différences finies, aux volumes finis, aux éléments finis,
un filtre de Karman,

un algorithme de minimisation aux moindres carrés,

ou toute combinaison de telles méthodes, ou encore toute autre méthode adaptée connue de l'homme de l'art.

Les systèmes d'équations 1 et 2 peuvent être intégrés de manière couplée pour réaliser des calculs d'estimation de distances $d(\eta)$ à un plus proche objet dans une direction $\eta$ donnée et des distances $d_i$ à des objets caractéristiques i dans des directions caractéristiques $\eta_i$.

Le dispositif 100 selon le premier aspect de l'invention permet ainsi d'estimer un champ de profondeur $d(\eta)$ dans les directions n données et des directions $\eta_i$ caractéristiques.

Les valeurs estimées de distances et les champs de profondeurs estimés mentionnés jusqu'ici sont avantageusement déterminées par le dispositif 100 selon le premier aspect de l'invention à différents instants selon une fréquence de calcul.. La fréquence de calcul est par exemple de l'ordre de 1 Hz à 200Hz.

Ainsi, l'information d de profondeur déterminée par l'unité 40 de calcul est délivrée à différents instants et permet un suivi de la profondeur à partir du capteur 10 optique au cours du temps.

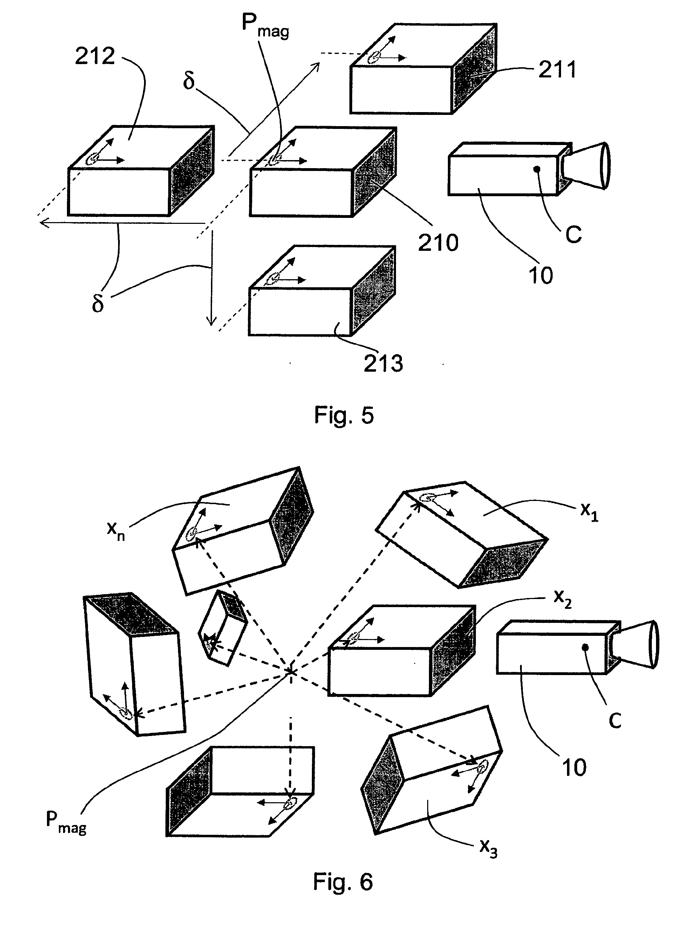

On va maintenant décrire, en regard des figures 5 et 6, des variantes avantageuses du dispositif 100 selon le premier aspect de l'invention présentant différentes dispositions envisagées de l'ensemble 21 de capteurs magnétiques.

Selon une première de ces variantes, représentée sur la figure 5, l'ensemble 21 de capteurs magnétiques comporte quatre capteurs magnétiques tri-axes, les quatre capteurs magnétiques étant disposés selon une configuration centrée.

On entend par configuration centrée une configuration dans laquelle les capteurs magnétiques sont tous alignés, c'est-à-dire que chaque axe d'un capteur magnétique est aligné avec l'axe correspondant de chacun des autres capteurs magnétique. Un capteur magnétique 210 est un capteur central, les autres capteurs magnétiques 211, 212, 213 étant disposés de manière périphérique à une distance donnée du capteur central selon des axes respectifs d'un repère lié au capteur central.

Les capteurs périphériques 211, 212, 213 peuvent être à une même distance donnée $\delta$ du capteur 210 de référence, comme représenté sur la figure 5, ou bien à des distances données différentes. Ces distances données sont préférentiellement connues et stockées dans l'unité 22 de traitement du moyen 20 d'estimation de champ magnétique.

Avantageusement, mais non limitativement, les coefficients de la matrice H, de taille 3x3, sont alors estimés par différences finies unilatérale entre les mesures fournies par le capteur central 210 et chacun des capteurs périphériques, ce qui permet de calculer les 9 coefficients de la matrice H.

Cette variante n'est toutefois pas limitée à 4 capteurs magnétiques, on peut envisager de disposer plus de capteurs périphériques autour du capteur magnétique central 210, par exemple six, soit deux sur chacun de ses axes de part et d'autre, ce qui permet d'estimer les coefficients de la matrice H par une méthode des-différences finies centrées, qui donne des résultats plus fiables.

Le point particulier $P_{mag}$ considéré dans les calculs précédents est alors préférentiellement, mais non limitativement, au niveau du capteur magnétique central 210.

Selon une deuxième de ces variantes, représentée sur la figure 6, l'ensemble 21 de capteurs magnétiques comprend un nombre donné n de capteurs $x_1$, $x_2$, ... $x_n$ disposés selon une configuration redondante.

On entend par configuration redondante une configuration dans laquelle plusieurs capteurs magnétiques, préférentiellement au moins 3, sont disposés autour du capteur 10 optique, chacun à une position et selon une orientation propre donnée.

Préférentiellement, mais non limitativement, la position et l'orientation de chaque capteur magnétique $x_j$ dans le repère capteur sont connues et stockés dans l'unité 22 de traitement du moyen 20 d'estimation de champ magnétique, sous la forme d'un vecteur position et d'une matrice de rotation $R_j$.

De manière avantageuse, mais non limitative, les coefficients de la matrice H sont alors estimés de la manière suivante :

Chaque capteur $x_j$ donne une mesure $m_j$ du champ magnétique B qui vérifie l'équation : $m_j = R_j B(x_j)$.

Par une approximation au premier ordre du champ magnétique, on obtient alors l'équation suivante :

$$(R_j)^{-1} m_j = \vec{B}(0) + H.\vec{x_j},$$

qui permet de d'estimer la matrice H.

On a alors autant d'estimations de la matrice H que de capteurs magnétiques, et on peut retenir pour matrice H une moyenne de ces estimations. Cette moyenne peut être obtenue par une régression linéaire, par un algorithme de minimisation aux moindres carrés, ou toute autre méthode adaptée connue de l'homme de l'art. Avantageusement, mais non limitativement, l'information iB - par exemple la matrice H - de champ peut être déterminée en tenant compte de propriétés intrinsèques supposées du champ magnétique B.

Dans le cadre de cette variante de l'invention, on retiendra préférentiellement des propriétés déduites des équations de Maxwell, comme par exemple :

- le champ magnétique est à divergence nulle (donc la matrice H est de trace nulle)
- le champ magnétique dérive d'un potentiel scalaire (donc la matrice H est symétrique)

Selon une variante avantageuse de l'invention, représentée sur la figure 3, les données magnétiques sont en outre utilisées pour recaler les informations iC inertielles. A cet effet, l'unité 22 de traitement du moyen 20 d'estimation de champ magnétique est en outre destinée à fournir une information iB' secondaire de champ. A titre d'exemple non limitatif, l'information iB' peut contenir la matrice H, ou la valeur du champ magnétique en fonction du temps. Le recalage de l'information iC inertielle par l'information iB' secondaire de champ est alors avantageusement réalisé à partir de l'équation 1.

Cette information iB' secondaire constitue ainsi une donnée externe qui compense les biais induits par les mesures mC inertielles et les erreurs d'intégration numériques de l'unité 32 de traitement de l'unité 30 inertielle, compensation réalisée par exemple au moyen d'un filtre de Kalman.

Dans cette variante, le moyen 20 du dispositif 100 selon le premier aspect de l'invention produit lui-même des données externes, rendant ainsi résultats fournis par l'unité inertielles étant plus pertinents. On s'affranchit ainsi de la nécessité d'un dispositif de géolocalisation.

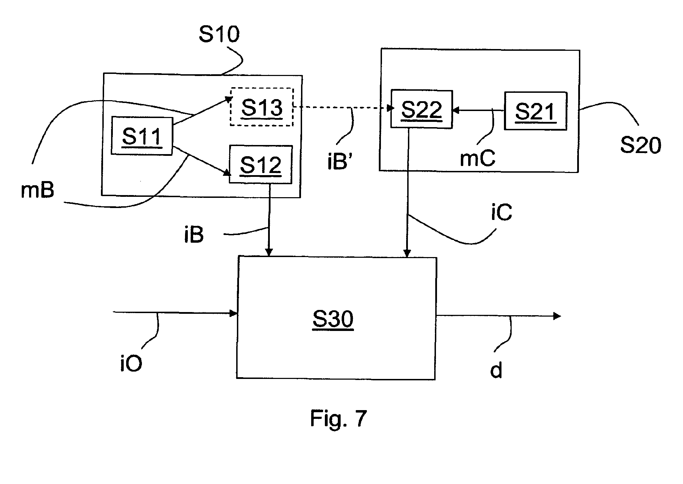

On va maintenant décrire, en regard de la figure 7, un procédé d'estimation de déplacement du capteur un procédé de détermination d'une information d de profondeur à partir d'un capteur 10 optique susceptible d'être en déplacement selon le deuxième aspect de l'invention.

Le procédé selon le deuxième aspect de l'invention est avantageusement, mais non limitativement, implémenté par un dispositif 100 selon le premier aspect de l'invention, et comprend une étape S10 d'estimation d'un champ magnétique B, une étape S20 d'estimation de déplacement du capteur 10 optique, et une étape S30 de détermination d'une information d de profondeur à partir du capteur 10 optique.

L'étape S10 d'estimation d'un champ magnétique B est avantageusement réalisée par le moyen 20 d'estimation d'un champ magnétique B et comprend :

- une sous-étape S11 de détermination de mesures mB du champ magnétique B, avantageusement réalisée par l'ensemble 21 de capteurs magnétique, et
- une sous-étape S12 de détermination d'une information iB de champ représentative du champ magnétique B à partir des mesures mB du champ magnétique, avantageusement réalisée par l'unité 22 de traitement du moyen 20.

L'étape S20 d'estimation de déplacement du capteur est avantageusement réalisée par l'unité 30 inertielle et comprend :

- une sous-étape S21 de détermination de mesures mC inertielles du déplacement du capteur 10 optique, avantageusement réalisée par l'ensemble 31 de capteurs inertiels, et
- une sous-étape S22 de détermination d'une information iC de déplacement représentative du déplacement du capteur 10 optique à partir des mesures mC inertielles, avantageusement réalisée par l'unité 32 de traitement de l'unité 30 inertielle.

L'information d de profondeur à partir du capteur 10 optique est déterminée à partir de l'information iB de champ, de l'information iC de déplacement et d'une information iO optique fournie par le capteur 10 optique.

L'information d de profondeur, l'information iB magnétique, leurs variantes avantageuses et leurs exemples non limitatifs ont déjà été décrits en référence au dispositif selon le premier aspect de l'invention.

Avantageusement, mais non limitativement, l'étape S10 d'estimation du champ magnétique B comprend en outre une sous-étape S12 de détermination d'une information iB' magnétique secondaire, l'information iC de déplacement du capteur 10 optique étant alors déterminée à partir des mesures mC inertielles et de l'information iB' magnétique secondaire.

Les variantes avantageuses et exemples non limitatifs de l'information iB' magnétique secondaire ont déjà été décrits en référence au dispositif selon le premier aspect de l'invention.

L'invention concerne aussi, selon un troisième aspect, un dispositif (200) optique de détermination de données tridimensionnelles représenté sur la figure 1.

Le dispositif selon le troisième aspect de l'invention comprend un capteur 10 optique et un dispositif 100 selon le premier aspect de l'invention.

On entend par détermination de données tridimensionnelles la détermination d'informations concernant trois directions de l'espace. Une telle détermination peut généralement être réalisée par mesure directe par utilisation d'un sonar ou d'un télémètre laser, ou encore par analyse d'images, par calculs numériques réalisées sur des mesures directes, ou par toute autre méthode adaptée connue de l'homme de l'art.

Dans le cadre du dispositif 200 selon le troisième aspect de l'invention, la détermination selon deux dimensions est avantageusement réalisée par traitement des mesures d'intensités lumineuses enregistrées par les récepteurs du capteur 10 optique.

Avantageusement, ces données bidimensionnelles sont complétées par un champ de profondeur estimé par le dispositif 100 selon le premier aspect de l'invention.

## Revendications

1. Dispositif (100) de détermination d'une information (d) de profondeur à partir d'un capteur (10) optique susceptible d'être en déplacement, le dispositif (100) étant **caractérisé en ce qu'**il comprend :

 - un moyen (20) d'estimation d'un champ magnétique (B), le moyen (20) comprenant

 • un ensemble (21) de capteurs magnétiques destinés à être disposés de manière solidaire du capteur (10) optique, l'ensemble de capteurs étant destiné à fournir des mesures (mB) du champ magnétique (B), et
 • une unité (22) de traitement destinée à déterminer une information (iB) de champ représentative du champ magnétique (B), à partir des mesures (mB) du champ magnétique (B),

 - une unité (30) inertielle comprenant

 • un ensemble (31) de capteurs inertiels destinés à être disposés de manière solidaire du capteur (10) optique et à fournir des mesures (mC) inertielles du déplacement du capteur (10) optique, et
 • une unité (32) de traitement destinée à déterminer une information (iC) de déplacement représentative du déplacement du capteur (10) optique à partir des mesures (mC) inertielles,

 - une unité (40) de calcul destinée à déterminer, à partir de l'information (iB) de champ, de l'information (iC) de déplacement et d'une information (iO) optique fournie par le capteur (10) optique, une information (d) de profondeur à partir du capteur (10) optique.

2. Dispositif selon la revendication 1, l'information (iO) optique comprenant des informations représentatives d'une intensité lumineuse reçue par le capteur (10) optique dans des directions respectives ($\eta$ ; $\eta_i$), le dispositif étant **caractérisé en ce que** l'information (d) de profondeur, que l'unité (40) de calcul est destinée à déterminer, comprend des valeurs estimées de distances ($d(\eta)$ ; $d_i$) respectives entre le capteur (10) optique et des objets suivant les directions respectives ($\eta$ ; $\eta_i$), le dispositif permettant ainsi d'estimer un champ de profondeur à partir du capteur (10) optique.

3. Dispositif selon l'une des revendications 1 et 2, dans lequel l'information (iB) de champ comporte une matrice (H) représentative des dérivées partielles spatiales du champ magnétique (B), en un point particulier ($P_{mag}$), dans un repère lié au capteur (10) optique.

4. Dispositif selon l'une des revendications 1 à 3, dans lequel l'ensemble (21) de capteurs magnétiques comporte quatre capteurs magnétiques, chacun étant apte à mesurer le champ magnétique (B) selon trois axes, les quatre capteurs magnétiques étant disposés selon une configuration centrée.

5. Dispositif selon l'une des revendications 1 à 3, dans lequel l'ensemble (21) de capteurs magnétiques est disposé selon une configuration redondante.

6. Dispositif selon l'une des revendications 1 à 5, dans lequel l'unité (22) de traitement du moyen (20) d'estimation du champ magnétique (B) est destinée à déterminer l'information (iB) de champ à partir des mesures (mB) fournies par l'ensemble (21) de capteurs magnétiques et à partir de propriétés intrinsèques supposées du champ magnétique (B).

7. Dispositif selon l'une des revendications 1 à 6, dans lequel l'unité (22) de traitement du moyen (20) d'estimation du champ magnétique (B) est en outre destinée à fournir une information (iB') secondaire de champ, l'unité (32) de traitement de l'unité (30) inertielle étant alors destinée à déterminer l'information (iC) de déplacement du capteur (10) optique à partir des mesures (mC) inertielles et de l'information (iB') secondaire de champ.

8. Procédé de détermination d'une information (d) de profondeur à partir d'un capteur (10) optique susceptible d'être en déplacement, le procédé étant **caractérisé en ce qu'**il comprend :

- une étape (S10) d'estimation d'un champ magnétique (B), laquelle étape comprend :

• une sous-étape (S11) de détermination de mesures (mB) du champ magnétique (B), et
• une sous-étape (S12) de détermination d'une information (iB) de champ représentative du champ magnétique (B) à partir des mesures (mB) du champ magnétique,

- une étape (S20) d'estimation de déplacement du capteur (10) optique, laquelle étape comprend :

• une sous-étape (S21) de détermination de mesures (mC) inertielles du déplacement du capteur (10) optique, et
• une sous-étape (S22) de détermination d'une information (iC) de déplacement représentative du déplacement du capteur (10) optique à partir des mesures (mC) inertielles,

- une étape (S30) de détermination, à partir de l'information (iB) de champ, de l'information (iC) de déplacement et d'une information (iO) optique fournie par le capteur (10) optique, d'une information (d) de profondeur à partir du capteur (10) optique.

9. Procédé selon la revendication 8, l'information (iO) optique comprenant des informations représentatives d'une intensité lumineuse reçue par le capteur (10) optique dans des directions ($\eta$ ; $\eta_i$) respectives, le procédé étant **caractérisé en ce que** l'information (d) de profondeur comprend des valeurs estimées de distances ($d(\eta)$ ; $d_i$) respectives entre le capteur (10) optique et des objets suivant les directions respectives ($\eta$ ; $\eta_i$), le procédé permettant ainsi d'estimer un champ de profondeur à partir du capteur (10) optique.

10. Procédé selon l'une des revendications 8 et 9, dans lequel l'information (iB) magnétique comprend une matrice (H) représentative des dérivées partielles spatiales du champ magnétique (B), en un point particulier ($P_{mag}$), dans un repère lié au capteur (10) optique.

11. Procédé selon l'une des revendications 8 à 10, dans lequel l'information (iB) magnétique est déterminée à partir des mesures magnétiques du champ magnétique (B) et de propriétés intrinsèques supposées du champ magnétique (B).

12. Procédé selon l'une des revendications 8 à 11, dans lequel l'étape (S10) d'estimation du champ magnétique (B) comprend en outre une sous-étape (S12) de détermination d'une information (iB') magnétique secondaire, l'information (iC) de déplacement du capteur (10) optique étant alors déterminée à partir des mesures (mC) inertielles et de l'information (iB') magnétique secondaire.

13. Dispositif (200) optique de détermination de données tridimensionnelles comprenant un capteur optique (10) susceptible d'être en déplacement et un dispositif (100) de détermination d'une information de profondeur à partir du capteur (10) optique selon l'une des revendications 1 à 7.

**Patentansprüche**

1. Vorrichtung (100) zum Ermitteln einer Tiefenangabe (d) ausgehend von einem optischen Sensor (10), der beweglich sein kann, wobei die Vorrichtung (100) **dadurch gekennzeichnet ist, dass** sie enthält:

- ein Mittel (20) zum Abschätzen eines Magnetfeldes (B), wobei das Mittel (20) aufweist

• eine Gruppe (21) von magnetischen Sensoren, die dazu bestimmt sind, in fester Verbindung mit dem optischen Sensor (10) angeordnet zu werden, wobei die Gruppe von Sensoren dazu bestimmt ist, Messungen (mB) von dem Magnetfeld (B) zu liefern, und
• eine Verarbeitungseinheit (22), die dazu bestimmt ist, eine für das Magnetfeld (B) repräsentative Feldangabe (iB) ausgehend von Messungen (mB) des Magnetfeldes (B) zu ermitteln,

- eine Trägheitsmesseinheit (30), enthaltend

• eine Gruppe (31) von Trägheitsmesssensoren, die dazu bestimmt sind, in fester Verbindung mit dem optischen Sensor (10) angeordnet zu werden und Trägheitsmessungen (mC) der Verlagerung des optischen Sensors (10) zu liefern, und
• eine Verarbeitungseinheit (32), die dazu bestimmt ist, eine für die Verlagerung des optischen Sensors (10) repräsentative Verlagerungsangabe (iC) ausgehend von den Trägheitsmessungen (mC) zu ermitteln,

- eine Recheneinheit (40), die dazu bestimmt ist, ausgehend von der Feldangabe (iB), der Verlagerungsangabe (iC) und einer von dem optischen Sensor (10) gelieferten optischen Angabe (iO) eine Tiefenangabe (d) ausgehend von dem optischen Sensor (10) zu ermitteln.

2. Vorrichtung nach Anspruch 1, wobei die optische Angabe (iO) Angaben enthält, die für eine Lichtstärke repräsentativ sind, die von dem optischen Sensor (10) in jeweiligen Richtungen ($\eta$; $\eta_i$) empfangen wird, wobei die Vorrichtung **dadurch gekennzeichnet ist, dass** die Tiefenangabe (d), welche die Recheneinheit (40) ermitteln soll, Schätzwerte ($d(\eta)$; $d_i$) über den jeweiligen Abstand zwischen dem optischen Sensor (10) und Objekten in den jeweiligen Richtungen ($\eta$; $\eta_i$) enthält, wobei die Vorrichtung somit ermöglicht, ein Tiefenfeld ausgehend von dem optischen Sensor (10) abzuschätzen.

3. Vorrichtung nach einem der Ansprüche 1 und 2, wobei die Feldangabe (iB) eine Matrix (H) enthält, die für die partiellen räumlichen Ableitungen des Magnetfeldes (B) an einem bestimmten Punkt ($P_{mag}$) in einem mit dem optischen Sensor (10) verbundenen Bezugssystem repräsentativ ist.

4. Vorrichtung nach einem der Ansprüche 1 bis 3, wobei die Gruppe (21) von magnetischen Sensoren vier magnetische Sensoren enthält, von denen jeder dazu geeignet ist, das Magnetfeld (B) in drei Achsen zu vermessen, wobei die vier magnetischen Sensoren in zentrischer Konfiguration angeordnet sind.

5. Vorrichtung nach einem der Ansprüche 1 bis 3, wobei die Gruppe (21) von magnetischen Sensoren in redundanter Konfiguration angeordnet sind.

6. Vorrichtung nach einem der Ansprüche 1 bis 5, wobei die Verarbeitungseinheit (22) des Mittels (20) zum Abschätzen des Magnetfeldes (B) dazu bestimmt ist, die Feldangabe (iB) ausgehend von den Messungen (mB), die von der Gruppe (21) von magnetischen Sensoren geliefert werden, und von angenommenen immanenten Eigenschaften des Magnetfeldes (B) zu ermitteln.

7. Vorrichtung nach einem der Ansprüche 1 bis 6, wobei die Verarbeitungseinheit (22) des Mittels (20) zum Abschätzen des Magnetfeldes (B) ferner dazu bestimmt ist, eine zusätzliche Feldangabe (iB') zu liefern, wobei die Verarbeitungseinheit (32) der Trägheitsmesseinheit (30) dann dazu bestimmt ist, die Angabe (iC) über die Verlagerung des optischen Sensors (10) ausgehend von den Trägheitsmessungen (mC) und der zusätzlichen Feldangabe (iB') zu ermitteln.

8. Verfahren zum Ermitteln einer Tiefenangabe (d) ausgehend von einem optischen Sensor (10), der beweglich sein kann, wobei das Verfahren **dadurch gekennzeichnet ist, dass** es umfasst:

- einen Schritt (S10) des Abschätzens eines Magnetfeldes (B), welcher Schritt umfasst:

• einen Unterschritt (S11) des Ermittelns von Messungen (mB) des Magnetfeldes (B), und
• einen Unterschritt (S12) des Ermittelns einer für das Magnetfeld (B) repräsentativen Feldangabe (iB) ausgehend von den Messungen (mB) des Magnetfeldes,

- einen Schritt (S20) des Abschätzens der Verlagerung des optischen Sensors (10), welcher Schritt umfasst:

• einen Unterschritt (S21) des Ermittelns von Trägheitsmessungen (mC) der Verlagerung des optischen Sensors (10) und
• einen Unterschritt (S22) des Ermittelns einer für die Verlagerung des optischen Sensors (10) repräsentativen Verlagerungsangabe (iC) ausgehend von den Trägheitsmessungen (mC),

- einen Schritt (S30) des Ermittelns einer Tiefenangabe (d) ausgehend von dem optischen Sensor (10), und zwar ausgehend von der Feldangabe (iB), der Verlagerungsangabe (iC) und einer von dem optischen Sensor (10) gelieferten optischen Angabe (iO).

9. Verfahren nach Anspruch 8, wobei die optische Angabe (iO) Angaben enthält, die für eine Lichtstärke repräsentativ sind, die von dem optischen Sensor (10) in jeweiligen Richtungen ($\eta$; $\eta_i$) empfangen wird, wobei das Verfahren **dadurch gekennzeichnet ist, dass** die Tiefenangabe (d) Schätzwerte (d($\eta$); $d_i$) über den jeweiligen Abstand zwischen dem optischen Sensor (10) und Objekten in den jeweiligen Richtungen ($\eta$; $\eta_i$) enthält, wobei das Verfahren somit ermöglicht, ein Tiefenfeld ausgehend von dem optischen Sensor (10) abzuschätzen.

10. Verfahren nach einem der Ansprüche 8 und 9, wobei die magnetische Angabe (iB) eine Matrix (H) enthält, die für die partiellen räumlichen Ableitungen des Magnetfeldes (B) an einem bestimmten Punkt ($P_{mag}$) in einem mit dem optischen Sensor (10) verbundenen Bezugssystem repräsentativ ist.

11. Verfahren nach einem der Ansprüche 8 bis 10, wobei die magnetische Angabe (iB) ausgehend von magnetischen Messungen des Magnetfeldes (B) und von angenommenen immanenten Eigenschaften des Magnetfeldes (B) ermittelt wird.

12. Verfahren nach einem der Ansprüche 8 bis 11, wobei der Schritt (S10) des Abschätzens des Magnetfeldes (B) ferner einen Unterschritt (S12) des Ermittelns einer zusätzlichen magnetischen Angabe (iB') enthält, wobei die Angabe (iC) über die Verlagerung des optischen Sensors (10) dann ausgehend von den Trägheitsmessungen (mC) und der zusätzlichen magnetischen Angabe (iB') ermittelt wird.

13. Optische Vorrichtung (200) zum Ermitteln von dreidimensionalen Daten, enthaltend einen optischen Sensor (10), der beweglich sein kann, und eine Vorrichtung (100) zum Ermitteln einer Tiefenangabe ausgehend von dem optischen Sensor (10), nach einem der Ansprüche 1 bis 7.

## Claims

1. Device (100) for determining depth information (d) from an optical sensor (10) liable to be moving, the device (100) being **characterised in that** it comprises:

   - a means (20) for estimating a magnetic field (B), the means (20) comprising

     • a set (21) of magnetic sensors intended to be disposed so as to be fixed to the optical sensor (10), the set of sensors being intended to supply measurements (mB) of the magnetic field (B), and
     • a processing unit (22) intended to determine field information (iB) representing the magnetic field (B), from measurements (mB) of the magnetic field (B),

   - an inertial unit (30) comprising

     • a set (31) of inertial sensors intended to be disposed so as to be fixed to the optical sensor (10) and to supply inertial measurements (mC) of the movement of the optical sensor (10),
     • a processing unit (32) intended to determine movement information (iC) representing the movement of the optical sensor (10) from the inertial measurements (mC),

   - a computing unit (40) intended to determine, from the field information (iB), movement information (iC) and optical information (iO) supplied by the optical sensor (10), and depth information (d) from the optical sensor (10).

2. Device according to claim 1, the optical information (iO) comprising information representing a light intensity received by the optical sensor (10) in respective directions ($\eta$; $\eta_i$) the device being **characterised in that** the depth information (d) that the computing unit (40) is intended to determine comprises respective estimated values of distances (d($\eta$) ; $d_i$) between the optical sensor (10) and objects in the respective directions ($\eta$; $\eta_i$), the device thus making it possible to estimate a depth field using the optical sensor (10).

3. Device according to one of claims 1 and 2, in which the field information (iB) comprises a matrix (H) representing the spatial partial derivatives of the magnetic field (B), at a particular point ($P_{mag}$), in a reference frame related to the optical sensor (10).

4. Device according to one of claims 1 to 3, in which the set (21) of magnetic sensors comprises four magnetic sensors, each being able to measure the magnetic field (B) along three axes, the four magnetic sensors being disposed in a centred configuration.

5. Device according to one of claims 1 to 3, in which the set (21) of magnetic sensors is disposed in a redundant configuration.

6. Devices according to one of claims 1 to 5, in which the processing unit (22) of the means (20) for estimating the magnetic field (B) is intended to determine the field information (iB) from the measurements (mB) supplied by the set (21) of magnetic sensors and from supposed intrinsic properties of the magnetic field (B).

7. Device according to one of claims 1 to 6, in which the processing unit (22) of the means (20) for estimating the magnetic field (B) is also intended to supply secondary field information (iB'), the processing unit (32) of the inertial unit (30) then being intended to determine the information (iC) on movement of the optical sensor (10) from the inertial measurements (mC) and the secondary field information (iB').

8. Method for determining depth information (d) from an optical sensor (10) liable to be moving, the method being **characterised in that** it comprises:

- a step (S10) of estimating a magnetic field (B), said step comprising:

• a substep (S11) of determining measurements (mB) of the magnetic field (B), and
• a substep (S12) of determining field information (iB) representing the magnetic field (B) from measurements (mB) of the magnetic field,

- a step (S20) of estimating the movement of the optical sensor (10), said step comprising:

• a substep (S21) of determining the inertial measurements (mC) of the movement of the optical sensor (10), and
• a substep (S22) of determining movement information (iC) representing the movement of the optical sensor (10) from the inertial measurements (mC),

- a step (S30) of determining, from the field information (iB), movement information (iC) and optical information (iO) supplied by the optical sensor (10), and depth information (d) from the optical sensor (10).

9. Method according claim 8, the optical information (iO) comprising information representing a light intensity received by the optical sensor (10) in respective directions $(\eta; \eta_i)$, the method being **characterised in that** the depth information (d) comprises estimated values of respective distances $(d(\eta); d_i)$ between the optical sensor (10) and objects in the respective directions $(\eta; \eta_i)$, the method thus making it possible to estimate a depth field using the optical sensor (10).

10. Method according to one of claims 8 and 9, in which the magnetic information (iB) comprises a matrix (H) representing the spatial partial derivatives of the magnetic field (B), at a particular point $(P_{mag})$ in a reference frame related to the optical sensor (10).

11. Method according to one of claims 8 to 10, in which the magnetic information (iB) is determined from the magnetic measurements of the magnetic field (B) and supposed intrinsic properties of the magnetic field (B).

12. Method according to one of claims 8 to 11, in which the step (S10) of estimating the magnetic field (B) also comprises a substep (S12) of determining secondary magnetic information (iB'), the information (iC) on movement of the optical sensor (10) then being determined from the inertial measurements (mC) and the secondary magnetic information (iB').

13. Optical device (200) for determining three-dimensional data, comprising an optical sensor (10) liable to be moving and a device (100) for determining depth information from the optical sensor (10) according to one of claims 1 to 7.

Fig. 1

Fig. 2

Fig. 3

Fig. 4

Fig. 5

Fig. 6

Fig. 7